(19) Europäisches Patentamt

European Patent Office

Office européen des brevets

(11) **EP 2 552 040 A1**

(12) **EUROPEAN PATENT APPLICATION**

(43) Date of publication:
**30.01.2013 Bulletin 2013/05**

(51) Int Cl.:
***H04J 14/02*** *(2006.01)*

(21) Application number: **11305991.9**

(22) Date of filing: **29.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **BUCHALI, Fred**
  **71336 Waiblingen (DE)**

• **KLEKAMP, Axel**
  **71706 Markgroeningen (DE)**

(74) Representative: **Urlichs, Stefan**
  **Alcatel-Lucent Deutschland AG**
  **Intellectual Property & Standards**
  **Lorenzstrasse 10**
  **70435 Stuttgart (DE)**

Remarks:
Amended claims in accordance with Rule 137(2) EPC.

(54) **Method and apparatus for routing and bandwidth assignment In wavelength multiplexed optical transmission**

(57)    In order to set up a connection in an optically switched network (3), a routing and adaptive bandwidth assignment algorithm is described. The connection uses a wavelength sub-band (ch1-ch6) of configurable width and the wavelength sub-band (ch1-ch6) contains a configurable number of equidistant subcarriers, which are modulated with a data signal to be transmitted using a multi-carrier modulation scheme. The routing and adaptive bandwidth assignment algorithm selects (S2) a path for the connection through the network, allocates (S7) a bandwidth to the projected connection, and selects (S8) an available wavelength sub-band that provides the allocated bandwidth. It is further determined (S4) whether a distance limitation exists for the transmission of the data signal along the selected path and in the case a distance limitation exists, guard bands (GB2, GB4, GB6) are added (S5) to the allocated bandwidth. Moreover, in the case of a distance limitation, the spectral power of the subcarriers within the selected wavelength sub-band can be increased (S6) with regard to an average power density.

Fig. 6

EP 2 552 040 A1

**Description**

**Field of the invention**

The present invention relates to the field of telecommunications and more particularly to routing and bandwidth assignment in an optically switched network for the transport of wavelength multiplexed signals.

**Background of the Invention**

In optical networks, a number of optical signals can be transmitted over a same optical fiber using wavelength division multiplexing (WDM). To create an optical WDM signal, data signals are usually modulated onto carrier wavelengths which have a regular channel spacing of typically 50 GHz, which is also referred to as the wavelength grid.

Recently, a modulation and multiplexing technique referred to as Orthogonal Frequency Division Multiplexing (OFDM) has been proposed for optical data transmission. For OFDM transmission, a WDM wavelength channel is subdivided into equidistant sub-cllannels, which all together carry the information content of a data signal in a parallel fashion at a lower symbol rate. Optical OFDM is described for instance in the article "Optical OFDM: A Promising High-speed Optical Transport Technology", by F. Buchali et al, Bell Lab Technical Journal 14(1) 2009 p. 215-14b, which is incorporated by reference herein.

OFDM can be used to flexibly transmit signals of different bitrate using a variable number of subcarriers or different higher constellation modulation schemes. Variable bitrate transmission technology using OFDM is described in co-pending European Patent Application "Variable bitrate OFDM" by the same inventors, EP filing number 09290957.1.

In EP2312770, it has also been proposed to use continuous waveband signals instead of a fixed WDM channel spacing. A continuous waveband signal will carry optical OFDM sub-bands of flexible bandwidth, thus implementing a bitrate variable transmission format in a dynamic network.

**Summary of the Invention**

While OFDM enables elastic bandwidth transmission through allocating a variable number of subcarriers per signal, this actually complicates wavelength routing in a meshed network. A signal transmitted over a particular optical network path will be routed through a number of network nodes, which will need to implement bandwidth variable wavelength cross-connections. Each network node along the path allocates a cross-connection that provides the required wavelength spectrum to create an appropriate-sized end-to-end optical path. In other words, each network node has to configure its switching window in a contiguous manner according to the spectral width of the incoming signals.

Usually, a routing and wavelength assignment (RWA) algorithm is used to determine network paths. Known RWA algorithms however use variables and constraints that depend on the number of wavelengths. The intrinsic flexibility of OFDM poses limitations to the applicability of traditional RWA algorithms. In particular, RWA algorithms are based on a fixed ITU channel grid (i.e. 50 GHz), where the allocated bandwidth per channel is determined by the channel grid itself and is independent on the channel bitrate. Conversely, the present invention uses a continuous wavelength band approach for transmission on optical fibers without a fixed wavelength grid.

To organize the optical paths in a meshed network, the below embodiments describe a routing and adaptive bandwidth assignment (RABA) algorithm as opposed to a routing and wavelength assignment (RWA) algorithm.

In the embodiments, a method is described for setting up a connection in an optically switched network. The connection uses a wavelength sub-band of configurable width and the wavelength sub-band contains a configurable number of equidistant subcarriers, which are modulated with a data signal to be transmitted using a multi-carrier modulation scheme. The routing and adaptive bandwidth assignment algorithm selects a path for the connection through the network, allocates a bandwidth to the projected connection, and selects an available wavelength sub-band that provides the allocated bandwidth. It is further determined whether a distance limitation exists for the transmission of the data signal along the selected path and in the case a distance limitation exists, guard bands are added to the allocated bandwidth. Moreover, in the case of a distance limitation, the spectral power of the subcarriers within the selected wavelength sub-band can be increased with regard to an average power density.

Advantages of the present invention include a high spectrum efficiency due to OFDNI format, a fine granularity of bitrate and spectral bandwidth, a high impairment tolerance, and a potential reduction in power consumption by partially deactivating the transmitters when adjusting them to the rate required at a specific time.

**Brief Description of the Drawings**

Preferred embodiments of the present invention will now be described with reference to the accompanying drawings in which

figure 1    shows a wavelength switched optical network;

figure 2    shows an optical OFDM transmitter;

figure 3    shows an optical OFDM receiver;

figure 4    shows a flow chart of a routing and adaptive bandwidth assignment algorithm;

figure 5    shows a first assignment of wavelength sub-bands per channels;

figure 6    shows a second assignment of wavelength sub-bands per channels with an additional guard band;

figure 7    shows a third assignment of wavelength sub-bands per channels with additional guard bands of different width, and

figure 8    shows a block diagram of a control plane element, suitable for carrying out the routing and adaptive bandwidth assignment algorithm of figure 4.

**Detailed Description of the Invention**

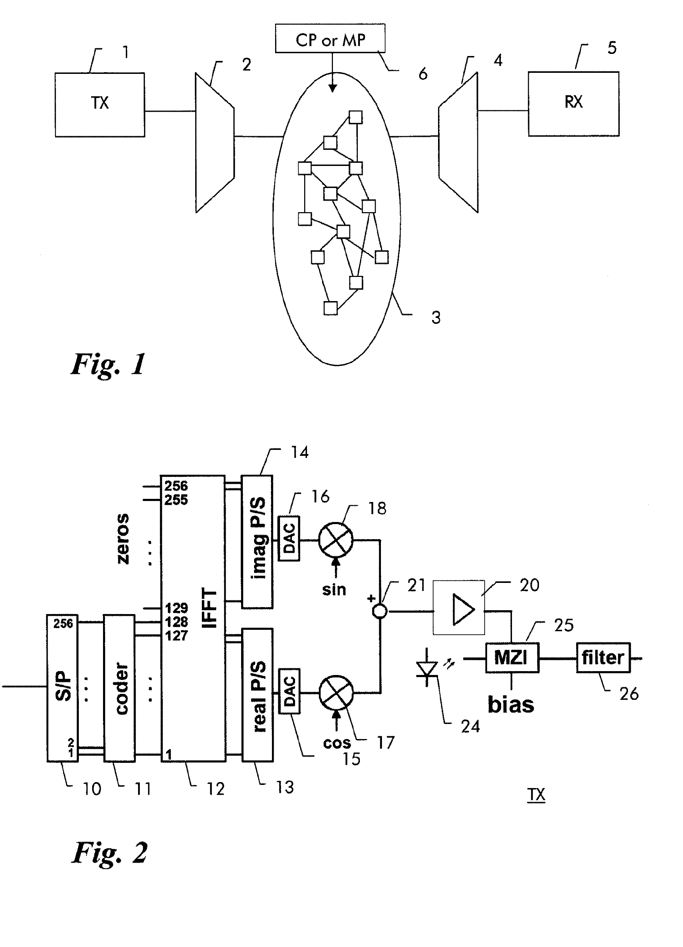

A principle scenario for optical data transmission is shown in figure 1. An optical transmitter 1 generates a colored optical signal occupying a certain sub-band of the wavelength spectrum. The optical signal is fed to a WDM multiplexer 2, which combines the optical signal with signals of different wavelengths coming from other transmitters (not shown) to create a wavelength multiplexed signal.

This WDM signal is then fed to an optical network 3. Optical network 3 contains a number of optical network nodes, which implement transparent cross-connections at individual sub-band level to switch the individual sub-band signals to their corresponding destinations. Optical network nodes implement all-optical switching technologies based on reconfigurable optical add-drop multiplexers (ROADM) such as the one described on EP2312770, which is incorporated by reference herein.

A WDM signal coming from network 3 is then fed to an optical demultiplexer, which extracts the original sub-band signal and forwards it to a receiver 5.

Optical network 3 must be configured to properly implement the required crossconnections for the numerous optical sub-band signals. This is achieved through a control plane (CP) or management plane (MP) 6, which implements a routing and adaptive bandwidth assignment (RABA) algorithm of the kind that will be described below.

The individual sub-bands carry a variable number of closely spaced, mutually orthogonal subcarriers that are modulated using a multi-carrier modulation and multiplexing scheme called OFDM. Optical OFDM transmitters and receivers are known per se and are described for example in EP2073474, which is incorporated by reference herein. Figure 2 shows the schematics of an optical OFDM transmitter TX.

OFDM transmitter TX generates from a data signal an OFDM signal for transmission over optical network 3. Transmitter TX contains a serial-to-parallel converter 10, a symbol coder 11, a digital signal processor 12 for performing an inverse (Fast) Fourier transformation; parallel-to-serial converters 13, 14 for the real and imaginary parts of the Fourier-transformed signal, and an up-conversion stage including multipliers 17, 18 for multiplying the converted analog signal with a frequency signal. Multipliers 17, 18 are often also termed mixers.

The up-converted signals are added together in an adder stage 21 and fed to an optical modulator 25, which modulates the cv signal of a transmit laser light source 24. Optionally, the modulated optical signal from the modulator 25 can be filtered by a filter device 26 and is then fed to WDM multiplexer 2 of figure 1.

The operation of the OFDM transmitter TX is as follows: The input data signal is a data signal with very high bitrate such as 40 Gbit/s. It is converted to a parallel format in S/P converter 10. Since the above configuration allows flexible bandwidth assignment, the parallel format can have an adjustable width of N bits, e.g. 256 in figure 2. The symbol coder 11 reduces the number parallel bits by forming multi-level symbols. For example, a quaternary format with real and imaginary part can be used thus reducing the 256 bits to 128 symbols. Alternatively, higher level symbol format such as 16-QAM or 64-QAM signals could be generated, in which one symbol carries 4 or 6 bits, respectively.

Processor 12 performs an inverse Fourier transform (IFFT) on the coded signals. The output of the IFFT 12 is a time domain signal which has an imaginary and a real part. These two sub-signals are converted back to a serial format in P/S converters 13, 14 and undergo then a digital-to-analog conversion by digital-to-analog converters (DACs) 15, 16, respectively.

The two analog output signals will then be combined for transmission. Since these are the real and imaginary parts of a complex signal, up-conversion at an auxiliary frequency is required. For this purpose, a single auxiliary frequency signal can be used, but with a phase difference of 90° between the imaginary and real part sub-signals.

The phase shifted auxiliary frequency signals and the corresponding real and imaginary part sub-signals are multiplied by the two electrical multipliers 17 and 18, respectively and added together in adder stage 21.

The resulting up-converted, combined signal is then fed to an amplifier and limiter 20, which directly drives a single drive amplitude modulator 25, which is in the embodiment a Mach-Zehnder interferometer (MZI), to modulate a cv laser signal from laser light source 24. System performance can be optimized by adjusting the electrical variable gain of amplifier 20 and the bias voltage of modulator 25. With these two parameters, the subcarrier power and the ratio of the optical carrier power to subcarrier power can be adjusted.

Optional filter 26 serves as optical single sideband filter to suppress the lower frequency sideband. This helps maintaining subcarrier phase information in the presence of chromatic dispersion.

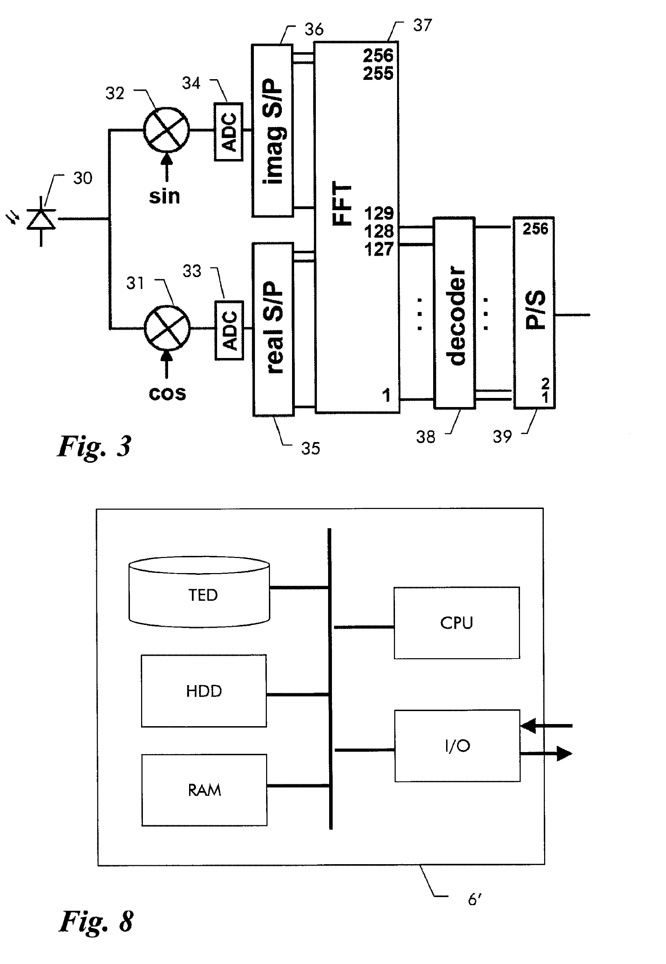

In the receiver, the reverse steps of analog-to-digital conversion and fast Fourier transform will be performed. Figure 3 shows a schematic setup of an optical OFDM receiver. The received optical signal is converted to an electrical form by O/E converter 30 with subsequent down conversion in multiplier stages 31, 32 to the base band using local auxiliary sin and cos signals. The down-converted signals are analog-to-digital converted by A/D converters 33, 34 and fed via serial to parallel (S/P) converters 35, 36 to a processor 37, which performs a Fast Fourier Transform (FFT). After FFT a simple phase decision is applied to each subcarrier for QPSK, whereas a combined phase and amplitude decision will be applied for QAM modulation. The resulting output is decoded in decoder stage 38 and converted back to a serial format using P/S converter 39.

Due its discrete nature, optical OFDM is very suitable for generating optical signals of configurable rate and bandwidth. An OFDM signal of higher bandwidth will have more OFDM subcarriers, while an OFDM signal of narrower bandwidth will occupy a lesser number of OFDM subcarriers. Moreover, by simply changing the coding format in the transmitter, signals of different spectral efficiency can be generated, depending for example on the transmission distance or the transmission quality, e.g. the Q-factor performance at the receiver.

The preferred embodiments provide a variable bitrate per channel and allocation of a variable bandwidth for each channel is allowed. Channels can be arranged in a "grid-less" approach, one adjacent to the other without periodic guard bands in-between. A lack of guard bands between adjacent channels may however cause limitations in maximum transmission distance, e.g. at high bitrates. If necessary to achieve a required transmission distance, the proposed algorithm can therefore insert predefined guard bands to increase maximum transmission distance. Such guard bands when assigned to a target path will increase the bandwidth of this path.

Typically the optical fibers are operated with constant power per WDM channel. In a continuous waveband approach, it is proposed in the preferred embodiments to apply a constant spectral power density for all paths. The bandwidth of a path includes guard bands at either side, when assigned. If a guard band is assigned to a particular path, the spectral power density will be increased by a factor of k.

For instance, based on the approach of constant spectral power density it has been found out that for bitrates from 10 to 200 Gbit/s a nearly linear dependency in transmission reach exists from 2000 to 1150 km without using guard bands. Thus, knowing the bitrate of a data signal to be transported, it can be evaluated whether that signal can properly pass a certain path length or not.

It has further been found out that the introduction of bitrate dependent guard bands for channels at lower bitrates can increase the transmission reach to 3300 and 2500 km for 10 and 20 Gbit/s, respectively, by increasing the spectral power for these channels moderately. Such an increase in the spectral power will be called power boost hereinafter. The guard-bands are inserted to avoid nonlinear interaction with neighboring channels.

<u>The RABA boundary conditions</u>

The spectral granularity of the transmitters and wavelength cross-connects is F GHz and the capacity of a subcarrier is equal to C Gb/s. These parameters depend for instance on the routed path length and physical constraints along the path such as loss, chromatic dispersion, PMD, nonlinearities, etc..

Serving a connection i that requires $T_i$ subcarriers is translated to finding a starting subcarrier frequency $f_i$ after which it can use $T_i$ contiguous frequencies.

It is assumed that a function exists that connects the transmission rate of a connection and the allocated spectrum, so that a bandwidth demand of $B_i$ can be mapped to a demand of $T_i$ subcarriers; e.g. $T_i = B_i/C_i$.

It is further assumed that for a connection (s,d) from a source s to a destination d, a continuous spectrum, i.e. a continuous set of subcarriers with or without guard band is required, such that $T_{sd}$ subcarriers are allocated over a single path that connects (s,d);including guard bands if necessary.

<u>RABA formulation:</u>

The RABA algorithm can be formulated as follows:

Minimize costs c subject to the constraints:

(i) Cost function $c \geq f_{SD} + T_{SD}$, for all (s,d) pairs $f_{SD}$: Variable denoting the starting frequency for a path connecting (s,d). $T_{SD}$: Variable denoting the spectral width of the OFDM signal, e.g. defined by the number of subcarriers, serving for the connection (s,d)
(ii) Single path routing constraints $\Sigma X_p = 1$, for all (s,d) pairs xp: Boolean variable denoting if a path is used or not. In particular, xp equals 0 if path p is not utilized, and 1 if p is utilized.
(iii) Starting frequencies ordering constraints
(iv) Spectrum continuity and non-overlapping spectrum allocation

The above described formulation of RABA is an optimal integer linear programming formulation (ILP) for minimizing cost or utilized spectrum. The ILP algorithm finds the paths and the starting frequencies of the OFDM signal over those paths for minimizing cost or utilized spectrum. The algorithm determines the modulation format and spectral width which is used for the connection on the selected path. The number of variables and constraints used depend on the topology due to overlapping of paths considered. In the worst case the number of variables and constraints scale with the power of 4 of the number of nodes. Therefore, ILP is only suitable for small networks (10 nodes or even less) due to long computation time to find the optimum solution. For practical use, the optimization problem is decomposed in routing and bandwidth assignment where the demands are sequentially served one-by-one (heuristic algorithm).

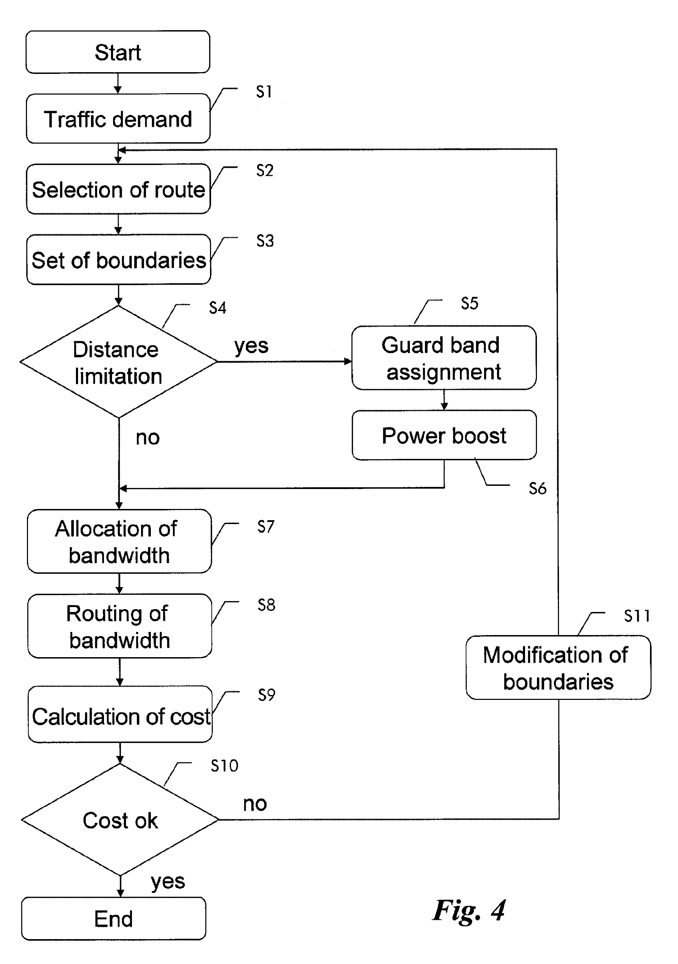

Figure 4 shows a flow chart of the heuristic RABA algorithm, which works as follows in detail:

- Application of a traffic demand (step S1)
- Selection of candidate routes (step S2)
- Setting of boundaries such as modulation scheme, routing constraints, splitting of demand (step S3)
- Check of distance limitations (step S4)
- In the case that a distance limitation is found, a guard band is assigned (step S5) and a power boost is applied (step S6)
- Allocation of bandwidth (step S7)
- Routing of bandwidth (step S8)
- Calculation of cost dependent on cost function cost(CAPEX, OPEX, utilized spectrum); (step S9)
- Check whether costs are acceptable (step S10)
- Optional restart of algorithm with modified boundaries (step S11) to search for a minimum cost solution.

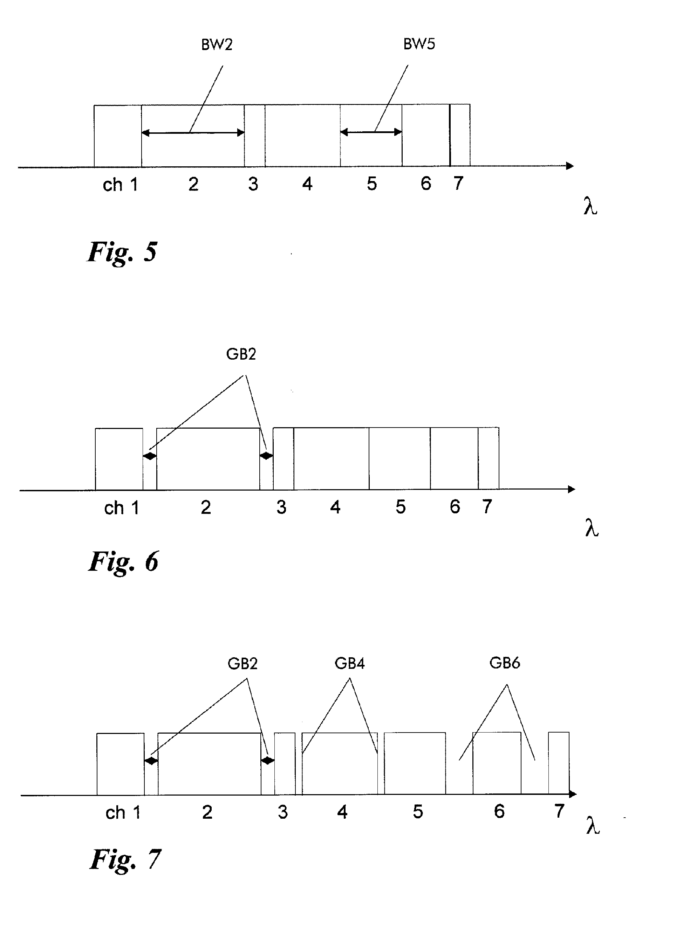

In more detail, in step S1, a demand for a new connection through an optical wavelength switched network is defined. The request (s,d) has a certain transmission rate requirement, such as 40 Gb/s, between a source s and a destination point d in the network.
In step S2, a path or several candidate paths through the network are determined and in step S3, boundary conditions are defined. This may include a selection of an appropriate modulation scheme (QPSK, 16-QAM ...). Routing constraints can be path diverse routing with regard to an existing connection, limitations in terms of path length difference between the new and an existing connection etc.. It can also be defined, whether and how a large traffic demand can be split at the transmitter over two or more spectral windows on the same or even on different fibers.
In step S4, it is then determined, whether a distance limitation exists on the selected path, i.e. whether the path length of the selected path would allow transmission of the signal at the required transmission rate taking into account the selected boundary conditions. If the path is too long, however, so that a satisfactory signal quality cannot be expected for the transmission end to end, additional guard bands are assigned to the spectral width of the signal (steps S5) and the spectral power of the signal increased by a factor of k (step S6).
In step S7, the actual bandwidth for the connection is assigned. This includes the number of OFDM subcarriers required to provide the requested transmission rate and any additional guard bands. The routing of the waveband in step S8 includes the allocation of a wavelength windows that suits the allocated bandwidth and is idle on each fiber span along the selected path. This wavelength window is allocated such that it does not interfere with any existing connection on any of the fibers spans along the projected path and such that it preferably does not leave any unwanted gaps towards already assigned adjacent waveband channels.
Step S9 performs a cost calculation for the path or several candidate paths. This calculation step makes use of pre-assigned metrics for the fiber spans along the path but can additionally penalize unused gaps towards pre-assigned wavelength sub-bands of existing connections. Step S10 checks then, whether the costs are below an acceptable value and optionally restarts in step 11 the algorithm to minimize the costs by finding a new and better path and waveband assignment.
The RABA algorithm allocates individual bandwidth for each optical channel based on requirements like bitrate, physical properties of the transmission line, etc.. An example of a bandwidth assignment for 7 channels ch1 -ch7 is shown in figure 5. The required bandwidth in this case is equal to the sum of all individual bandwidths, in contrast to the state of the art RWA where it would be 7*50 GHz for 7 channels.

The RABA algorithm with additional distance assignment includes a variable guard band in-between the channels. The guard band may be inserted in-between all channels or in case of requirement.

Figure 6 shows the assignment of a guard band GB2 to channel ch2. GB2 extends to both sides of channel ch2. Due to the existence of the GB2, the power level of the channel ch2 signal can be increased without introducing penalties on neighboring channels.

Figure 7 shows yet another channel assignment, where additional guard bands GB4 and GB6 are assigned to channels ch4 and ch6, respectively. Guard bands GB2, GB4, and GB6 have different width, thus allowing stronger or more moderate power boots, depending on the particular needs.

To minimize the overall guard band width (sum of all guard bands for all channels) it is preferable to consider a guard band in conjunction with the directly adjacent channels on either side. In particular, it is preferred to assign a guard band equal to the maximum of the width of the guard band from left and right hand side channel. This would eliminate overlapping guard intervals.

In another approach the channels are subdivided into low distance and high distance channels. One group requires a lower guard band than the other group, the width of guard band is determined by the channels requiring maximum transmission length.

The bandwidth may be assigned in a static or dynamic way. In case of dynamic assignment, an existing path may be terminated. If a path will be terminated, a variable bandwidth slot will be available for new assignment. The bandwidth slot may be re-used by a new channel at the same position in the waveband or the adjacent channels may be shifted to fill the wavelength gap. By shifting several bands in presence of more than one empty slots, several empty slots may be combined, thus providing more flexibility for new bandwidth assignment.

For the determination of a distance limitation a linear distance model versus bitrate BR can be used. As an example the maximum length L that can be achieved without adding guard bands is

$$L \ [km] = -4.5 * BR \ [GHz] + 2050$$

In another approach, the maximum transmission distance can be stored in a look up table, whereas the elements are calculated by the given equation. Guard band assignment is done using a look up table with either dependency on bitrate only or dependency on bitrate and targeted transmission length.

The power boost factor k in the preferred embodiment is given by a linear formula:

$$k = \text{targeted length} \ / \ \text{length without power boost} \times 1.2$$

Alternatively the power boost factor can be predefined by a look up table.

The RABA algorithm can be implemented into a central network management system as well as into a distributed control plane. In a distributed control plane, each network node has an associated controller. The controllers communicate with each other using the GMPLS protocol suite. Each controller has a local traffic engineering database, which contains topology and link state information of the network. The controllers exchange topology and link state information using the OSPF-TE protocol. Hence, the controller of the source network node can run the above described RABA algorithm to determine a path and waveband assignment and request path setup from affected nodes along the prospected path.

A block diagram of a network element for use in a distributed control plane is shown in figure 8. It contains a processing unit CPU, an input and output device I/O communicating with an associated network node and with other control plane elements in the network; a main memory RAM, a permanent storage such ad a hard disk drive HDD, for storing control software of the control plane element as well as configuration data; and a traffic engineering database TED. The traffic engineering database can be physically located on the same storage device HDD that keeps also the control software and configuration data. All components of the control plane element are interconnected by a bus system. Control plane element can be for instance a conventional personal computer or workstation running a convention operating system such as a UNIX derivate or the like.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method for setting up a connection in an optically switched network (3), wherein said connection uses a wavelength sub-band (chl-chb) of configurable width and wherein said wavelength sub-band (ch1-ch6) contains a configurable number of equidistant subcarriers, which are modulated with a data signal to be transmitted using a multi-carrier modulation scheme; wherein said method comprises performing routing and adaptive bandwidth assignment comprising selecting (S2) a path for said connection through said network (3), allocating (S7) a bandwidth to said connection, and selecting (S8) an available wavelength sub-band providing said allocated bandwidth; further comprising determining (S4) whether a distance limitation exists for the transmission of said data signal along the selected path and in the case of a distance limitation, adding (S5) guard bands (GB2, GB4, GB6) to said allocated bandwidth.

2. A method according to claim 1, further comprising in the case of a distance limitation, increasing (S6) the spectral power of the subcarriers within said selected wavelength sub-band with regard to an average power density.

3. A method according to claim 1, wherein determining (S4) whether a distance limitation exists uses a pre-determined linear distance model versus the transmission rate of said data signal.

4. A method according to claim 1, wherein determining (S4) whether a distance limitation exists uses a pre-determined look-up table providing a maximum transmission reach per transmission rate of said data signal.

5. A method according to claim 1, wherein the width of said guard bands (GB2, GB4, GB6) depend on the transmission rate of said data signal.

6. A method according to claim 5, wherein said guard band assignment (S5) is done using a look up table with either dependency on the transmission rate of said data signal only or dependency on transmission rate and projected path length.

7. A method according to claim 2, wherein the spectral power is increased by a factor of k, which depends from the projected length and the maximum transmission reach without power increase.

8. A method according to claim 1, further comprising calculating (S9) a cost function for said selected path and wavelength sub-band and initiating connection set-up if a cost value is below a predefined acceptable value.

9. A method according to claim 8, further comprising repeating said routing and adaptive bandwidth assignment to find a path and wavelength sub-band having a lower cost value.

10. A method according to claim 1, wherein said routing and adaptive bandwidth assignment further comprises selecting (S3, S11) a modulation scheme.

11. A method according to claim 1, wherein in the case that guard bands (GB2, GB4, GB6) are assigned to adjacent channels in the waveband, the guard band between said adjacent channels is taken as the maximum of the width of the guard band from either of the adjacent channels.

12. A control instance (6, 6') for routing and adaptive bandwidth assignment for establishing a connection in an optically switched network (3), wherein said connection uses a wavelength sub-band (ch1 -ch6) of configurable width and wherein said wavelength sub-band (ch1-ch6) contains a configurable number of equidistant subcarriers, which are modulated with a data signal to be transmitted using a multi-carrier modulation scheme; said control instance (6, 6') comprising a traffic engineering database (TED) storing topology and link state information about said network and a controller (CPU), which selects a path for said connection through said network, allocates a bandwidth to said connection, and selects an available wavelength sub-band providing said allocated bandwidth; wherein the processor further determines whether a distance limitation exists for the transmission of said data signal along the selected path and in case of a distance limitation, adds guard bands to said allocated bandwidth.

13. A control instance (6, 6') for an optically switched network comprising a control software program performing when executed on a controller (CPU) a routing and adaptive bandwidth assignment algorithm according any of claims 1-11.

**Amended claims in accordance with Rule 137(2) EPC.**

12. A control apparatus (6, 6') for routing and adaptive bandwidth assignment for establishing a connection in an optically switched network (3), wherein said connection uses a wavelength sub-band (ch1-ch6) of configurable width and wherein said wavelength sub-band (ch1-ch6) contains a configurable number of equidistant subcarriers, which are modulated with a data signal to be transmitted using a multi-carrier modulation scheme; said control apparatus (6, 6') comprising a traffic engineering database (TED) storing topology and link state information about said network and a processor (CPU), which selects a path for said connection through said network, allocates a bandwidth to said connection, and selects an available wavelength sub-band providing said allocated bandwidth; wherein the processor (CPU) further determines whether a distance limitation exists for the transmission of said data signal along the selected path and in case of a distance limitation, adds guard bands to said allocated bandwidth.

13. A control apparatus (6, 6') for an optically switched network comprising a control software program performing when executed on a processor (CPU) a routing and adaptive bandwidth assignment algorithm according any of claims 1-11.

**Fig. 1**

**Fig. 2**

**Fig. 3**

**Fig. 8**

Fig. 4

BW2          BW5

ch 1    2    3    4    5    6  7

λ

**Fig. 5**

GB2

ch 1    2    3    4    5    6  7

λ

**Fig. 6**

GB2        GB4        GB6

ch 1    2    3    4    5    6    7

λ

**Fig. 7**

EP 2 552 040 A1

Europäisches Patentamt
European Patent Office
Office européen des brevets

# EUROPEAN SEARCH REPORT

Application Number

EP 11 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/164620 A1 (JINNO MASAHIKO [JP] ET AL) 7 July 2011 (2011-07-07) | 1,5,6, 8-13 | INV. H04J14/02 |
| Y | * paragraph [0001] * <br> * paragraph [0078]; figure 2 * <br> * paragraph [0087] - paragraph [0097]; figures 6,7,8 * <br> * paragraph [0137] - paragraph [0154]; figures 16,17,18,19,20 * <br> * paragraph [0157] * <br> * paragraph [0192]; figure 29 * <br> * paragraph [0194] - paragraph [0223]; figures 30-37 * <br> * paragraph [0250] - paragraph [0289]; figures 42,44,45 * <br> ----- | 2-4,7 | |
| Y | LIANG DU ET AL: "Wdm channel spacing in ultra long haul optical OFDM systems", OPTICAL FIBRE TECHNOLOGY/AUSTRALIAN OPTICAL SOCIETY, 2006. ACOFT/AOS 2006. AUSTRALIAN CONFERENCE ON, IEEE, PISCATAWAY, NJ, USA, 10 July 2006 (2006-07-10), pages 7-9, XP031252089, ISBN: 978-0-9775657-1-9 * the whole document * <br> ----- | 2-4,7 | |
| A | KOZICKI B ET AL: "Filtering characteristics of highly-spectrum efficient spectrum-sliced elastic optical path (SLICE) network", OPTICAL FIBER COMMUNICATION - INCUDES POST DEADLINE PAPERS, 2009. OFC 2009. CONFERENCE ON, IEEE, PISCATAWAY, NJ, USA, 22 March 2009 (2009-03-22), pages 1-3, XP031467522, ISBN: 978-1-4244-2606-5 * the whole document * <br> ----- | 1-13 | |

TECHNICAL FIELDS SEARCHED (IPC)

H04J

-/--

The present search report has been drawn up for all claims

| Place of search | Date of completion of the search | Examiner |
|---|---|---|
| The Hague | 12 January 2012 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

Europäisches
Patentamt

European
Patent Office

Office européen
des brevets

**EUROPEAN SEARCH REPORT**

Application Number

EP 11 30 5991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAN TANG ET AL: "Coherent Optical OFDM Transmission Up to 1 Tb/s per Channel", JOURNAL OF LIGHTWAVE TECHNOLOGY, IEEE SERVICE CENTER, NEW YORK, NY, US, vol. PP, no. 16, 15 August 2009 (2009-08-15), pages 3511-3517, XP011262208, ISSN: 0733-8724 * the whole document * ----- | 1-13 | |
| | | | TECHNICAL FIELDS SEARCHED (IPC) |

The present search report has been drawn up for all claims

| Place of search | Date of completion of the search | Examiner |
|---|---|---|
| The Hague | 12 January 2012 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 30 5991

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2012

| Patent document cited in search report | Publication date | Patent family member(s) | Publication date |
|---|---|---|---|
| US 2011164620 A1 | 07-07-2011 | US 2011164620 A1<br>WO 2010032844 A1 | 07-07-2011<br>25-03-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 09290957 A
- EP 2312770 A
- EP 2073474 A

**Non-patent literature cited in the description**

- **F. BUCHALI et al.** Optical OFDM: A Promising High-speed Optical Transport Technology. *Bell Lab Technical Journal,* 2009, vol. 14 (1), 215-14b